Europäisches Patentamt

European Patent Office

Office européen des brevets

(19)

(11) Publication number: **0 512 506 A1**

## EUROPEAN PATENT APPLICATION

(12)

(21) Application number: 92107640.2

(22) Date of filing: 06.05.92

(51) Int. Cl.5: **B01D 53/36**, B01J 23/42

(30) Priority: 10.05.91 JP 105668/91
21.01.92 JP 8482/92

(43) Date of publication of application:
**11.11.92 Bulletin 92/46**

(84) Designated Contracting States:
**DE FR GB**

(71) Applicant: **SUMITOMO METAL MINING COMPANY LIMITED**
**11-3, Shinbashi 5-chome Minato-ku Tokyo 105(JP)**

(72) Inventor: **Zhang, Geng**
**Nakakokubun 3-18-35**
**Ichikawa-shi, Chiba-ken(JP)**
Inventor: **Kawakami, Hiroshi**
**Ohyamaguchi 2-8-3-304 Shirai-cho**
**Inba-gun, Chiba-ken(JP)**

(74) Representative: **Sparing Röhl Henseler**
**Patentanwälte European Patent Attorneys**
**Rethelstrasse 123**
**W-4000 Düsseldorf 1(DE)**

(54) Method for removing nitrogen oxides from exhaust gases.

(57) A method for removing nitrogen oxides from an exhaust gas by allowing the exhaust gas containing nitrogen oxides to be brought into contact with a catalyst containing platinum in an oxidizing atmosphere containing hydrocarbon. This method is capable of exhibiting its effect even for exhaust gases containing water and sulfur oxide.

The present invention relates to a method for effectively removing nitrogen oxides from gases exhausted from boilers, internal combustion engines of automobiles, etc. and nitric acid production plants and so on.

Nitrogen oxides ($NO_x$) contained in various kinds of gases exhausted from boilers, internal combustion engines of automobiles, etc. and plants for producing nitric acid are air pollutant substances harmful to human bodies and constitute a cause of acidic rain which poses problems from a viewpoint of safeguard of earthly environment. For this reason, it is desired to develop a method for effectively removing nitrogen oxides from these kinds of exhaust gases.

As a method for removing nitric monoxide (NO) from gases exhausted from automobiles, for example, there is known a method utilizing the so-called ternary catalyst containing platinum (Pt), rhodium (Rh) and cerium (Ce). In a gas which is exhausted from a gasoline engine which burns a fuel substantially at the theorical air/fuel ratio (A/F = 14.6), oxygen is at a low concentration which is nearly equal to that of carbon monoxide and residual hydrocarbon from a viewpoint of stoichimetry. It is therefore possible to remove the nitrogen oxides from this kind of exhaust gas together with the carbon monoxide and hydrocarbon by using the ternary catalyst. In this catalyst, the platinum has a function to oxydize the carbon monoxide and hydrocarbon, the rhodium has a function to reduce the nitrogen oxides, and the cerium has a function to exhaust or store oxygen dependently on composition of the exhaust gas. When a fuel is burnt in a fuel-lean condition, i.e., in oxygen-rich condition, however, even the rhodium which has a high activity to remove nitrogen can not exhibit its activity, whereby the ternary catalyst can not function as an effective catalyst.

On the other hand, the ternary catalyst can not be used for removing NO from gases which are exhausted from fuel-lean type engines, Diesel engines, boilers and so on, and contain oxygen in excessive amounts. For removing NO from these gases, it is general to adopt an ammonia reduction method which uses a $V_2O_5$-$TiO_2$ catalyst and ammonia as a reducing agent for reducing NO selectively. However, this method may allow, dependently on concentration of NO contained in the exhaust gases, excessive ammonia to be exhausted as a gas which is harmful, dangerous and to be treated difficultly.

There has already been proposed, for example by Japanese Patent Preliminary Publication No. Sho 63-100919, a method which permits using hydrocarbon in place of ammonia as a reducing agent which is free from the inconvenience described above. This method uses a catalyst which is prepared by treating a porous carrier such as alumina, silica, zeolite or the similar substance so as to carry copper. However, this method is not always sufficient in capability to remove nitrogen oxides, in particular in performance of the catalyst. Further, the copper catalyst poses problems that its activity is apt to be lowered by sulfur oxides and that its capability to remove nitrogen oxides is lowered by coexisting water when copper is carried by zeolite (See SHOKUBAI Vol.33, No.6, Pages 448 to 451, 1991).

In view of the present circumstances described above, it is a primary object of the present invention to provide a method for removing nitrogen oxides which is capable of exhibiting its capability to remove the nitrogen oxides even in coexistence with water and sulfur oxides.

According to the present invention, this object is attained by adopting a method which brings an exhaust gas containing nitrogen oxides into contact with a catalyst containing platinum in an oxidizing atmosphere in which hydrocarbon is present. The term of "oxidizing atmosphere" means here a condition of an exhaust gas which contains oxygen in an amount larger than that required for transforming all carbon monoxide , hydrogen and hydrocarbon contained in the exhaust gas into carbon dioxide gas and water.

For the method according to the present invention, it is preferable that the hydrocarbon is gasoline, kerosene, gas oil or a combination two or more of the substances mentioned above, since gasoline, kerosene and gas oil have a common merit to remarkably reduce production of dinito-oxide ($N_2O$) which destroys the ozone layer and constitutes a cause for heating the earth. However, the method according to the present invention is compatible with any type of hydrocarbon so far as it is basically capable of reducing the nitrogen oxides and hydrocarbon which are contained in an exhaust gas. When hydrocarbon is insufficient in an atmosphere, it is allowed to intriduce hydrocarbon into the atmosphere from outside. Selectable as the hydrocarbon to be introduced from outside is paraffin hydrocarbon such as propane, butane or cyclohexane, olefin hydrocarbon such as ethylene or propylene, or aromatic hydrocarbon such as toluene or xylene. The hydrocarbon is to be introduced in an amount sufficient or excessive, as a total including the hydrocarbon existing in the exhaust gas, for producing $N_2$, $H_2O$ and $CO_2$ through stoichimetric reactions with all the nitrogen oxides contained in the exhaust gas.

The platinum contained in the catalyst to be used by the method according to the present invention is dispersed on a carrier so that it is held while having a large surface area and its catalytic function can be activated effectively. Usable as the catalyst mentioned above are silica, titania, zirconia, aluminium phosphate, silica-alumina, boria-silica-alumina, zeolite and so on. For preparing the cayalyst, one, two or more of these substances should be dispersed by an adequate method which can not be defined in particular.

The method according to the present invention adopts the catalyst containing platinum which allows the hydrocarbon to be reacted with the nitrogen oxides with higher priority than that for reaction with oxygen in the oxydizing atmosphere.

Further, the method according to the present invention allows sulfur oxides to coexist in exhaust gases. When sulfur dioxide which has affinity with sulfur coexists in an exhaust gas containing nitrogen oxides, $(NO)(SO_x)Pt$ is apt to be produced rather than $(NO)_2 Pt$ on the surface of platinum and mobility of nitrogen monoxide is lowered on the surface of platinum. As a result, the method according to the present invention reduces production of $N_2O$ and enhances production ratio of $N_2$ during the reaction process with the catalyst.

This and other objects as well as the features and the advantages of the present invention will become apparent from the following detailed description of the preferred embodiments.

Activity Test

After putting 1 g of the catalyst into each of four reaction tubes made of stainless steel and having an inside diameter of 10 mm, a reaction gas (containing NO at 1000ppm, $C_3H_6$ at 1000 ppm, 5% by volume of $O_2$ and rest percent of He) was flowed through the reaction tubes at a flow rate of 30 ml/min while keeping the catalyst layers at 150°C, 250°C and 300°C, respectively. At outlet of each of the reaction tubes, concentrations of NO and $NO_2$ were measured with a chemically luminescent $NO_x$ meter. Selected as a standard for evaluating performance of the catalyst was transformation ratio of NO expressed by [($NO_x$ concentration at inlet of the reaction tube - $NO_x$ concentration at outlet of the reaction tube)/($NO_x$ concentration at inlet of the reaction tube)] x 100%. In addition, $N_2O$ obtained as a by-product was detected by gas chromatography.

First Embodiment

0.4 g of hydrogen chloroplatinate was dissolved with 200 ml of water, added to 15 g of silica carrier (CARIACT-10, having BET surface area of 300 $m^2/g$ prepared by Fuji Davison Chemical, Ltd.), evaporated for drying into solid and calcined for three hours in air heated at 500°C to prepare a catalyst. Results of an activity test performed by using this catalyst are summarized in Table 1.

Comparison Example 1

An activity test performed by using the silica carrier which is mentioned in the first embodiment but does not carry platinum. Results obtained by this activity test are summarized also in Table 1.

Second Embodiment

A solution obtained by dissolving 0.4 g of hydrogen chloroplaninate with 200 ml of water was added to 23 g of $Al(OH)_3$ powder (aluminium oxide of grade G prepared by Nippon Ketjen Co., Ltd. and having BET surface area of 340 $m^2/g$) and evaporated for drying into solid while being stirred. The solid was dried at 110°C for 24 hours and calcined in air heated to 500°C, whereby a catalyst containing $Pt/Al_2O_3$ at 1% by weight was prepared. Before using the catalyst for removing nitogen oxides, it was reduced in a hydrocarbon containing 20% of hydrogen for 2 hours at 400°C. Results of an activity test effected by using this catalyst are summarized in Table 1.

Comparison Example 2

The $Al(OH)_3$ powder prepared in the second embodiment was calcined for 3 hours in air heated to 500°C without allowing it to carry platinum. Results obtained by effecting an activity test with the catalyst are listed also in Table 1.

Third Embodiment

75 g of $Al(NO_3)_3$ $9H_2O$ and 23 g of $H_3PO_4$ were dissolved with 1 liter of water and ammonia water was dripped into the solution at a rate of 1 ml/min until pH became 7 to 8. The solution was stirred for about 2 hours and then kept standing for 24 hours, whereafter the solution was filtered, washed with pure water and dried for 24 hours at 110°C. Then, aluminium phosphate was obtained by calcinating the dried filtrate for 3 hours in air heated to 500°C. A solution 0.4 g hydrogen chloroplatinate was added to 15 g of ammonium phosphate thus obtained, evaporated for drying into solid while stirring and dried for 20 hours at 110°C. Then, a catalyst was prepared by calcinating the solid for three hours in air heated to 500°C. Before using the catalyst, it was reduced in a hydrocarbon containing 20% of hydrogen for 2 hours at 400°C. Results obtained by an activity test by using this catalyst are summarized in Table 1.

Comparison Example 3

An activity test was effected by using the aluminium phosphate obtained in the third embodiment. Results obtained by this test are summarized in Table 1.

Fourth Embodiment

A solution which was prepared by dissolving 24.7 g of boric acid with 200 ml of hot water (80°C) was added to 32 g of the $Al(OH)_3$ powder which was prepared in the second embodiment, stirred for two hours and evaporated at 110°C for drying into solid. Alminium borate ($AlB_xO_y$) was obtained by calcinating the solid for three hours in air heated to 500°C. A solution prepared by dissolving 2 g of hydrogen chloroplatinate was added to the alminium borate thus obtained, evaporated for drying into solid while stirring and dried for 20 hours at 110°C. Then, a catalyst was prepared by calcinating the solid for three hours in air heated to 500°C. Before using the catalyst for removing nitrogen oxides, it was reduced in a hydrocarbon containing 20% of hydrogen for two hours at 400°C. Results obtained by effecting an activity test with the catalyst are listed in Table 1.

Comparison Example 4

An activity test was performed by using the aluminium borate which was obtained in the fourth embodiment. Results of this test are listed in Table 1.

Fifth Embodiment

In this embodiment, propane was selected as the hydrocarbon for reducing nitrogen oxides in place of propylene which was used as the hydrocarbon for reducing nitrogen oxides in the third embodiment. An reaction activity of $Pt/Al_2O_3$ in the third embodiment is listed in Table 1.

Sixth Embodiment

1 g of the catalyst which was prepared in the third embodiment was put into each of five reaction tubes made of stainless steel (having an inside diameter of 10 mm) and kept at a predetermined reaction temperature (200°C, 250°C, 300°C, 350°C or 400 °C). A gas containing nitrogen oxides (hereinafter referred to as a reaction gas) was allowed to pass through this reaction tube at a flow rate of 60 ml/min. The reaction gas had been diluted with helium gas so that nitrogen monoxide (NO) was 1000 ppm, oxygen ($O_2$) was 10% by volume, sulfur dioxide ($SO_2$) was 100 ppm and water was 10% by volum in composition thereof. Propylene at 1000 ppm was selected as a reducing agent. While the reaction gas was flowing through the catalyst, NO contained in the reaction gas was transformed into $N_2O$ and $N_2$. Selected as standards for evaluating performance of the catalyst were a transformation ratio of NO, a transformation ratio to $N_2O$ and a transformation ratio to $N_2$ expressed by the formulae shown below:

Transformation ratio of NO = {(NO$_x$ at inlet of reaction tube - NO$_x$ at outlet of reaction tube)/(No$_x$ at inlet of reaction tube)} x 100

Transformation ratio to $N_2O$ = {($2N_2O$)/(NO$_x$ at inlet of reaction tube)} x 100

Transformation ratio to $N_2$ = Transformation ratio of NO - Transformation ratio to $N_2O$

Results of an experiment effected as the sixth embodiment are listed in Table 2. As is-seen from Table 2, the introduction of $SO_2$ and $H_2O$ enhances the transformation ratio of NO and improves the transformation ratio to $N_2$ within a broard temperature range.

Seventh Embodiment

4

An activity test effected in the seventh embodiment was the same as that performed in the sixth embodiment, except for two points that a reaction gas selected in the seventh embodiment did not contain sulfur dioxide or water, and that a reducing agent selected in the seventh embodiment was an illuminating kerosene of 5.7 µl/h (containing hydrocarbon having a cabon number of 8 at about 230 ppm). A transformation ratio of NO and a transformation ratio to $N_2O$ are obtained in this embodiment listed in Table 2. However, it will be understood that the temperature range allowing removal of nitrogen oxides is broardened and production of $N_2O$ is effectively restricted by adopting propylene in place of the illuminating kerosene at the reducing agent.

Eighth Embodiment

An activity test effected as the eighth embodiment was the same as that in the sixth embodiment, except for a point that the former selected, as a reducing agent, an illuminating kerosene of 5.7 µl/h (containing hydrocarbon having a carbon number of 8 at about 230 ppm). A transformation ratio of NO and a transformation ratio to $N_2$ obtained in the eighth embodiment are listed in Table 2. However, it will be understood that the eighth embodiment can provide an enhanced transformation ratio of NO and broardened temperature range for transformation to $N_2$ by introducing $SO_2$ and $H_2O$.

Ninth Embodiment

In the ninth embodiment, the platinum catalyst for the method according to the present invention was prepared in the procedures described below. 49.1 liters of water was put into a reaction vat made of stainless steel, having a capacity of 100 liters and equipped with a stirrer, and 9450 g of an aqueous solution of aluminium sulfate containing 774 g of aluminium trioxide ($Al_2O_3$) was added to water, heated to 70°C and kept at this temperature. While stirring the solution of sodium alminate containing 1275 g of aluminium trioxide was dripped into the heated aqueous solution, whereby a slurry of alumina hydrate at pH 9.0 was obtained. 55 g of nitric acid at a concentration of 30% was added to the alumina hydrate until pH reaches 5.4. While further agitating the slurry, an aqueous solution of sodium cilicate containing 510 g of silicon oxide ($SiO_2$) was dripped into the slurry, thereby obtaining alumina-silica hydrate at pH 8.5. A cake of the alumina-silica hydrate was obtained by filtering and washing the hydrate. 94.4 g of ortho boric acid of regent grade containing 53.4 g of boron oxide ($B_2O_3$) was added to 600 g of the cake containing 1014 g of aluminasilica, heated and kneaded in a kneader. The cake was molded with a molding machine equipped with a die having a diameter of 5.0 mm and dried at 110°C for 15 hours. After calcining the cake at 600°C for two hours in an electric furnace, the cake was crushed so as to obtain boria-silica-alumina having a mean particle size of 35 to 60 mm mesh, and consisting of 5% by weight of boron oxide, 20% by weight of silicon oxide and 75% by weight of aluminium trioxide. An aqueous solution prepared by dissolving 0.4 g of hydrogen chloroplaninate into 200 ml of water was added to 15 g of boria-silica-alumina, dried into solid while stirring, and then dried at 110°C for 24 hours. A catalyst of $Pt/B_2O_3$-$SiO_2$-$Al_2O_3$ was obtained by calcining the solid for three hours at 500°C. This catalyst carried platinum at 1% by weight.

After reducing the catalyst in a hydrocarbon containing 20% of hydrogen for two hours at 500°C, propylene at 1000 ppm was selected as a reducing agent. A test for removing nitrogen oxides was effected in the procedures which are the same as those adopted for the sixth embodiment and test results were summarized in Table 2. It will be understood that the ninth embodiment provides a catalyst which is capable of effectively restricting production of $N_2O$.

Tenth Embodiment

An activity test effected in the tenth embodiment was the same as that of the eighth embodiment, except for two points that a reaction gas selected for the tenth embodiment did not contain sulfur dioxide nor water, and that an illuminating kerosene was used as a reducing agent. A transformation ratio of NO and a transformation ratio to $N_2O$ obtained in the tenth embodiment were as listed in Table 2. It will be understood that the selection of the illuminating kerosene as a reducing agent in place of propylene broardens the temperature range permitting the removal of nitrogen oxides and effectively restricts the production of $N_2O$.

Eleventh Embodiment

In the eleventh embodiment, the catalyst which was obtained in the ninth embodiment was reduced for two hours in a hydrocarbon containing 20% of hydrogen and at a temperature of 500°C, and gasoline, an illuminating kerosene or gas oil was used as a reducing agent. A test for removing nitogen oxides was effected in procedures which are the same as those adopted fpr the sixth embodiment. From results obtained from the test effected in the eleventh embodiment, a transformation ratio of NO and a transformation ratio to $N_2O$ were calculated as listed in Table 2. As is seen from Table 2, the production of $N_2O$ is effectively restricted by using gasoline, kerosene or gas oil as a reducing agent.

Table 1

| | Transformation Rate of NO (%) | | | |
|---|---|---|---|---|
| | Reaction Temperature | | | |
| | 150°C | 200°C | 250°C | 300°C |
| Embodiment 1 Pt/SiO₂ (1.0wt% ) | 16 | 57 | 42 | 27 |
| Comparison example 1 SiO₂ | 0 | 0 | 0 | 0 |
| Embodiment 2 Pt/Al₂O₃ (1.0wt%) | 31 | 76 | 59 | 37 |
| Comparison example 2 Al₂O₃ | 3 | 5 | 10 | 18 |
| Embodiment 3 Pt/AlPO₄ (1wt%) | 15 | 83 | 63 | 31 |
| Comparison example 3 AlPO₄ | 0 | 2 | 12 | 20 |
| Embodiment 4 Pt/AlBO₃ (5wt%) | 80 | 61 | 49 | 15 |
| Comparison example 4 AlBO₃ | 3 | 4 | 9 | 18 |
| Embodiment 5 Pt/AlPO₄ (1wt%) | 30 | 81 | 58 | 28 |
| NO : 1000ppm Reaction Tem. : 200 °C O₂ : 5 vol.% C₃H₆ : 1000ppm (C₃H₆ in Embodiment 5 : 1000ppm ) | | | | |

Table 2

Flow Rate: 60 ml    O$_2$: 10 Vol.%

| | Reducing Agent (ppm) | Trans-forma-tion Rate | Reaction Temperature (°C) | | | | | |
|---|---|---|---|---|---|---|---|---|
| | | | 150 | 200 | 250 | 300 | 350 | 400 |
| Embodiment 6 1% Pt/AlPO₄ SO₂:100ppm H₂O:10vol.% | Propylene 1000 | NO To N₂O To N₂ | – – – | 61 22 39 | 46 22 24 | 34 14 20 | 15 6 9 | 5 1 4 |
| Embodiment 7 1% Pt/AlPO₄ SO₂,H₂O none | Kerosene 230 | NO To N₂O To N₂ | – – – | 40 16 24 | 48 12 36 | 43 9 34 | 40 6 34 | 35 4 31 |
| Embodiment 8 1% Pt/AlPO₄ SO₂:100ppm H₂O:10vol.% | Kerosene 230 | NO To N₂O To N₂ | – – – | 29 10 19 | 52 12 40 | 56 9 47 | 46 5 41 | 38 4 34 |
| Embodiment 9 1% Pt/ B₂O₃-SiO₂-Al₂O₃ SO₂:100ppm H₂O:10vol.% | Propylene 1000 | NO To N₂O To N₂ | – – – | 59 22 37 | 50 20 30 | 40 11 29 | 30 5 25 | 12 8 4 |
| Embodiment 10 1% Pt/ B₂O₃-SiO₂-Al₂O₃ SO₂: none | Kerosene 230 | NO To N₂O To N₂ | – – – | 54 26 28 | 55 20 35 | 40 8 32 | 31 5 26 | 31 3 28 |
| Embodiment 11 1% Pt/ B₂O₃-SiO₂-Al₂O₃ | Gasoline 500 | NO To N₂O To N₂ | – – – | 44 16 28 | 43 13 30 | 51 14 37 | 46 10 36 | 40 4 36 |
| | Gas Oil 60 | NO To N₂O To N₂ | – – – | 39 14 25 | 43 9 34 | 49 8 41 | 42 4 38 | 30 2 28 |
| | Gas Oil 120 | NO To N₂O To N₂ | – – – | 39 12 27 | 58 10 48 | 52 6 46 | 42 3 39 | 32 2 30 |
| | Kerosene 230 | NO To N₂O To N₂ | – – – | 53 25 28 | 59 15 44 | 57 11 46 | 42 8 34 | 35 4 31 |
| | Kerosene 460 | NO To N₂O To N₂ | – – – | 55 23 32 | 67 20 47 | 57 9 48 | 45 5 40 | 40 3 37 |

As is understood from the foregoing description, the method according to the present invention makes it possible to effectively remove nitrogen oxides and restrict production of $N_2O$ as a by-product. Further, the method according to the present invention can exhibit its effect to remove nitrogen oxides even from exhaust gases which contain water and sulfur oxides.

7

**Claims**

1. A method for removing nitrogen oxides from an exhaust gas by allowing the exhaust gas containing nitrogen oxides to be brought into contact with a catalyst containing platinum in an oxydizing atmosphere containing hydrocarbon.

2. A method according to Claim 1 wherein said hydrocarbon is any one of gasoline, kerosene and gas oil.

3. A method according to Claim 1 wherein said hydrocarbon is a combination of at least two of gasoline, kerosene and gas oil.

4. A method according to Claim 1, 2 or 3 wherein said exhaust gas further contains sulfur oxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 344 323 (JOHNSON, MATTHEY & CO.)<br>* page 1, line 7 - page 2, line 17; claims 1,12 * | 1,2 | B01D53/36<br>B01J23/42 |
| P,X | EP-A-0 455 491 (SAKAI CHEMICAL INDUSTRY CO.)<br>* page 2, line 23 - line 33 *<br>* page 2, line 53 - page 3, line 4; claim 1 * | 1,3 | |
| A | EP-A-0 169 939 (SÜD-CHEMIE AG)<br>* page 1 - page 2; claims 1,9,10 * | 1,4 | |

TECHNICAL FIELDS SEARCHED (Int. Cl.5)

B01D
B01J

The present search report has been drawn up for all claims

| Place of search | Date of completion of the search | Examiner |
|---|---|---|
| THE HAGUE | 21 JULY 1992 | CUBAS ALCARAZ J.L. |